# EUROPÄISCHE PATENTSCHRIFT

(11) **EP 2 777 223 B1**
(45) Veröffentlichungstag und Bekanntmachung des Hinweises auf die Patenterteilung: **30.05.2018**
(21) Anmeldenummer: 12787687.8
(22) Anmeldetag: 08.11.2012
(51) Int. Cl.: H04L 12/66, H04L 12/28

(54) **RESIDENTIAL GATEWAY FÜR OPTISCHES HEIMNETZ**
RESIDENTIAL GATEWAY FOR AN OPTICAL HOME NETWORK
PASSERELLE RÉSIDENTIELLE POUR RÉSEAU DOMESTIQUE OPTIQUE

(30) Priorität: 08.11.2011 EP 11188334
(43) Veröffentlichungstag der Anmeldung: 17.09.2014
(73) Patentinhaber: Teleconnect GmbH, 01157 Dresden (DE)
(72) Erfinder: BLUSCHKE, Andreas, 01217 Dresden (DE); MATTHEWS, Michael, 01157 Dresden (DE); RIETZSCH, Philipp, 01157 Dresden (DE)
(74) Vertreter: Caspary, Karsten
(86) Internationale Anmeldenummer: PCT/EP2012/072190
(87) Internationale Veröffentlichungsnummer: WO 2013/068499

(56) Entgegenhaltungen:
- US-A1- 2006 209 857
- US-A1- 2007 025 738
- US-A1- 2009 100 492
- US-A1- 2011 002 245
- Y. Shi, D. Visani, C.M.Okonkwo, H. Yang, H.P.A. van Boom, G. Tartarini: "First Demonstration of HD Video Distribution over Large-Core POF employing UWB for In-Home Networks", Internet Article, 6. März 2011 (2011-03-06), 10. März 2011 (2011-03-10), XP002695741, Eindhoven, Netherlands Gefunden im Internet: URL:http://ieeexplore.ieee.org/stamp/stamp .jsp?tp=&arnumber=5875645&tag=1 [gefunden am 2013-04-19]
- Olaf Ziemann: "POF-Plus Handbook", Internet Article, 3. Juni 2011 (2011-06-03), 3. Juni 2011 (2011-06-03), Seiten 1-107, XP002695742, Internet Gefunden im Internet: URL:http://130.192.85.10:8080/pofplus/docu ments/POF-PLUS%20Handbook.pdf [gefunden am 2013-04-17]
- Anonymous: "AFL-6400 Analog/Digital Fiber Optic Link", , 9 December 2010 (2010-12-09), XP055422625, Retrieved from the Internet: URL:http://www.lab-systems.com/products/fi b-opt/afl6400/index.html [retrieved on 2017-11-08]

## Beschreibung

Die vorliegende Erfindung betrifft ein Residential Gateway für ein optisches Heimnetz nach dem Oberbegriff des Anspruchs 1 sowie einen Heimnetzanschluss und ein optisches Heimnetz, das das Residential Gateway sowie einen oder mehrere Heimnetzanschlüsse umfasst.

Leitungsgebundene Heimnetztechnologien gibt es heute in verschiedenen Ausprägungen. Beispielsweise sollen genannt werden: Multimedia over Coax Alliance (MoCA), Universal Powerline Association (UPA), Home Phoneline Networking Alliance (HomePNA), IEEE (Institute of Electrical and Electronics Engineers) 1901, HomePlug (HP) oder HP Audio/Video (HPAV).

Die Datenübertragung erfolgt dabei über verschiedene elektrische Übertragungsmedien. Einzelne Technologien sind auf spezielle Übertragungsmedien zugeschnitten, z.B. MoCA für Koaxialleitungen; HomePNA für verdrillte (Kupfer-) Doppeladern, UPA, IEEE 1901, und HD-PLC für Stromversorgungsleitungen, auch unter dem Begriff Powerline Communication bekannt. Manche Technologien können auch "zweckentfremdet" verwendet werden, z.B. wird UPA auch für Koaxialleitungen verwendet. Außerdem gibt es mit dem G.hn-Spezifikation eine Technologie, die durch die Möglichkeit der Parameteranpassung für verschiedenartige elektrische Übertragungsmedien optimiert werden kann. G.hn wird auch as "HomeGrid-Standard" bezeichnet.

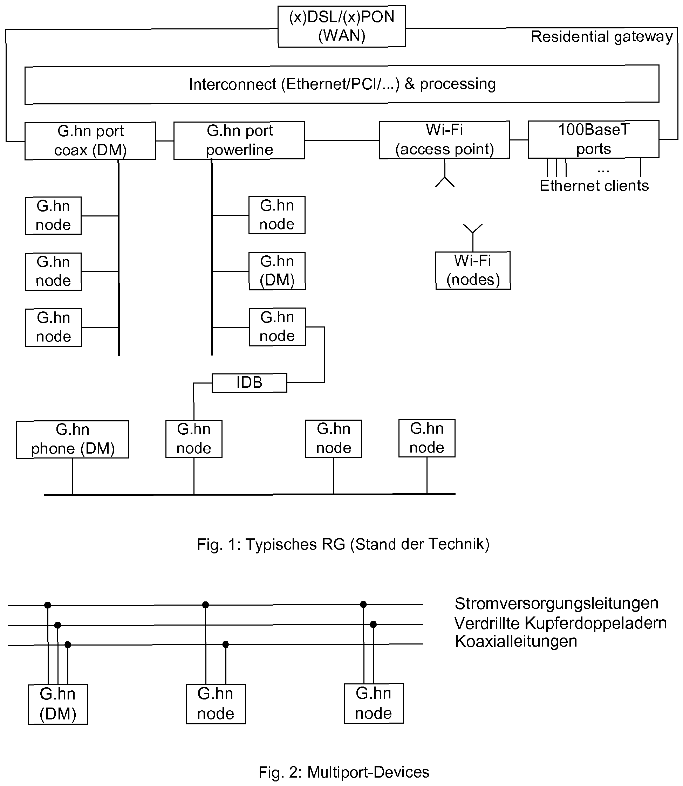

Um die verschiedenen Technologien und Übertragungsmedien in einem Heimnetz bedienen zu können, gibt es bisher Residential Gateways (RG oder auch Integrated Access Device - IAD oder auch Customer Premises Equipment [CPE] genannt) mit unterschiedlichen Schnittstellen. In Fig. 1 ist ein typisches, herkömmliches Beispiel gezeigt (Oksman, V.; Galli, S.: G.hn: The New ITU-T Home Networking Standard. IEEE Communications Magazine. October 2009. pp. 138-145. http://grouper.ieee.org/groups/scc21/2030/email3/ pdf9RQcxfcWX3.pdf). Es ist ein RG dargestellt, welcher als Zugang zum Breitbandnetz (Wide Area Network - WAN) über einen Digital Subscriber Line- ((x)DSL-) oder Passive Optical Network- ((x)PON-) Port und auf der Kunden- (Teilnehmer-) Seite (Local Area Network - LAN; Heimnetz) über verschiedene Anschlussmöglichkeiten verfügt. Beispielhaft sind dargestellt: WiFi (WLAN - Wireless Local Area Network), Ethernetports (100BaseT) und zwei G.hn-Ports (für Koaxialleitungen als Domainmaster (DM) und für Stromversorgungsleitungen als Knoten bzw. Node). Ein weiterer Teil des Heimnetzes (basierend auf verdrillten Doppeladern) ist über eine Inter-Domain Bridge (IDB) angebunden.

Die Knoten bzw. Nodes können, wie z.B. in Fig. 2 gezeigt, mehrfach untereinander verbunden sein. In diesem Fall spricht man von Multiport-Devices. Nodes mit mehreren Ports können sich den besten Pfad, also das beste Übertragungsmedium bzw. die beste Verbindungsstrecke auswählen. Wenn die mit den Übertragungsmedien erreichbaren Bitraten die Anforderungen nicht erfüllen können, können diese Übertragungsmedien auch kombiniert werden (entweder wird der beste Weg ausgewählt oder aber die Übertragung erfolgt über mehrere Übertragungsmedien zeitgleich) und somit kann die Bitrate erhöht werden. Auf diese Art und Weise können QoS (Quality of Service) Forderungen (z.B. für HDTV - High Definition Television) erfüllt werden.

Ein anderer Weg zum Erzielen einer zuverlässigeren Verbindung der Nodes untereinander oder der Nodes mit dem RG (DM) ist der Einsatz optischer Übertragungsmedien. In diesem Zusammenhang wächst bedingt durch deren positive Eigenschaften, wie z.B. Störfestigkeit gegenüber elektromagnetischer Beeinflussung, einfache Installation usw. u.a., die Bedeutung der POF, zu deutsch optische Polymer-Fasern (engl. Polymer Optical Fiber oder Plastic Optical Fiber).

Die Erweiterung eines RG um Möglichkeiten zur Übertragung über optische Übertragungsmedien kann dabei bisher gemäß dreier Möglichkeiten erfolgen:

### Erste Möglichkeit:

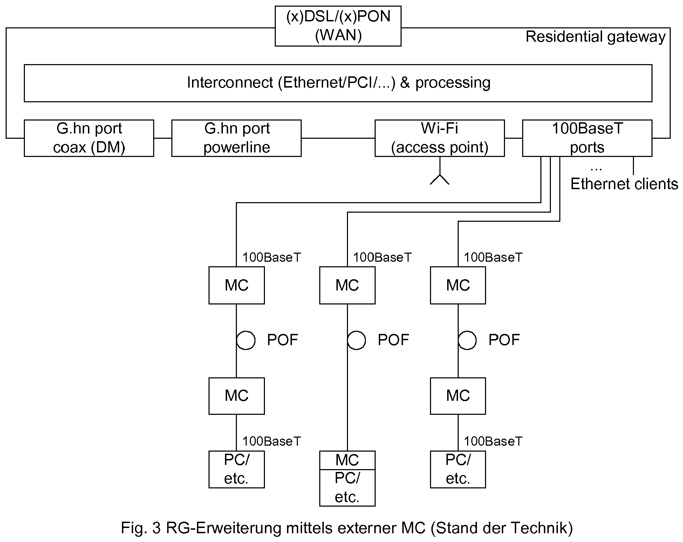

Der in Fig. 3 gezeigter RG ist gegenüber dem in Fig. 1 dargestellten nicht verändert. Es erfolgt eine externe Erweiterung mittels Medienkonvertern (MC). Als Beispiel sind drei POF-Erweiterungen dargestellt. Hier soll der Hinweis erfolgen, dass "POF" in der vorliegenden Erfindung hier symbolisch für verschiedene optische Übertragungsmedien verwendet wird, d.h. die möglichen Erweiterungen können ebenso für andere optische Medien und Techniken verwendet werden, z. B. für die Freiraumübertragung, die Visible Light Communication (VLC) oder vor allem auch Glasfasern - der Unterschied kann z.B. in den für die Übertragung verwendeten Wellenlängen bestehen. Auf jeder Seite einer optischen Strecke ist je ein optischer Transceiver einzusetzen (im Beispiel sechs Medienkonverter MC). Die ursprünglich vorhandenen Ethernet 100Base-T-Ports sind dabei allerdings nicht mehr für andere Zwecke verwendbar. Da Medienkonverter nur für Fast Ethernet verfügbar sind, ist eine Begrenzung auf Fast Ethernet-Bitraten notwendig.

### Zweite Möglichkeit:

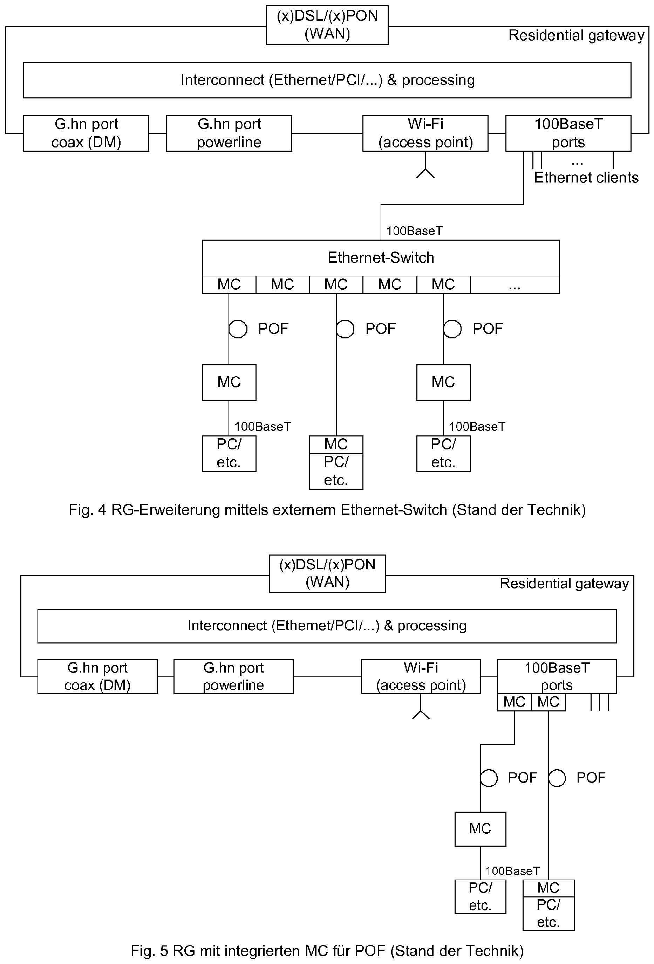

Wie auch in Fig. 3 wird der RG gegenüber Fig. 1 nicht verändert, sondern nur ergänzt (siehe Fig. 4). Um allerdings die Anzahl der 100Base-T-Ports nicht einschränken zu müssen, wird ein externer Ethernet-Switch zur Anwendung gebracht. Die Anzahl der genutzten optischen Transceiver bzw. Medienkonverter MC beträgt bei drei POF-Übertragungsstrecken ebenfalls sechs. Es wird im Vergleich zu Fig. 3 aber nur ein 100Base-T-Port belegt.

### Dritte Möglichkeit:

In Fig. 5 ist dargestellt, dass eine POF-Schnittstelle auch als fest integrierter Bestandteil eines RG realisiert werden kann. Für drei Ports wären ebenfalls sechs MC notwendig.

In dem Artikel [Homefibre: POF Home Networking - Installation Experience, Präsentation, 24. Fachgruppentreffen ITG Fachgruppe 5.4.1, Berlin, Oktober 2007. http://www.pofac.de/ downloads/itgfg/fgt24/FGT24_Berlin_Faller_POF-Installation.pdf] findet man alle drei erwähnten Möglichkeiten dargestellt.

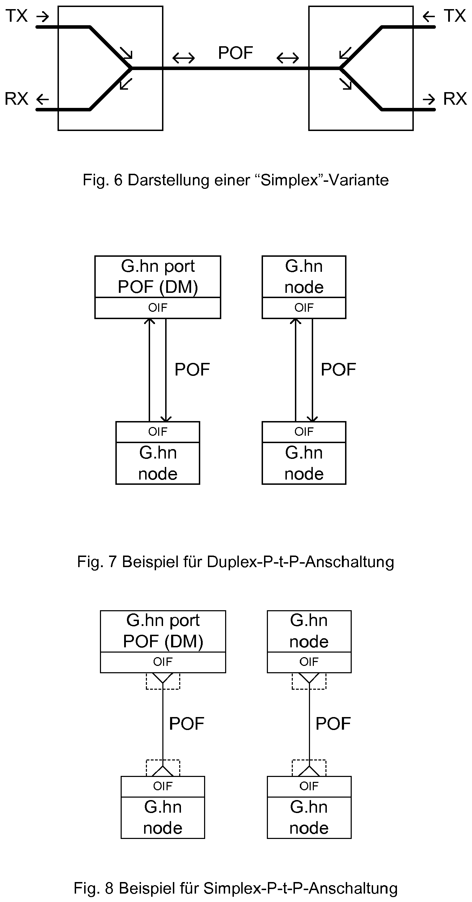

Es soll darauf hingewiesen werden, dass die grafische Darstellung der "POF" als Linie als "Duplex" (zwei Fasern) oder auch als "Simplex" (eine Faser mit jeweils zwei zusätzlichen 1:2-Richtkopplern) zu verstehen ist. Die Fig. 6 verdeutlicht diesen Sachverhalt (TX - Senderichtung; RX - Empfangsrichtung). Um für die "Simplex"-Variante eine Datenübertragung über eine akzeptable POF-Länge gewährleisten zu können, sind 1:2-Richtkoppler mit hoher Übersprechdämpfung erforderlich [Abrate S., et al. Bidirectional transmission of the Gigabit Ethernet signal over a single SI-POF. Proceedings of 20. ICPOF, Bilbao/Spanien, S. 513-518].

Der oben beschriebene Stand der Technik weist die folgenden Nachteile auf:
- Es ist eine Beschränkung auf Fast Ethernet-Bitraten (100 Mbit/s) vorhanden. Für die optische Übertragung der nächstfolgenden Standard-Ethernet-Bitraten-Stufe (Gigabit-Ethernet - 1000 Mbit/s) sind bisher keine technischen Lösungen verfügbar (z.B. sind gegenwärtig die dafür erforderlichen Sende-LEDs nicht verfügbar).
- Die beschriebenen bekannten Lösungen basieren auf Standardtechnik für Fast Ethernet und sind eigentlich nur für den Duplexbetrieb gut geeignet. Bedingt durch die Verwendung von Fast Ethernet-Technik werden für den Simplexbetrieb sehr hohe Anforderungen an das Übersprechen der 1:2-Richtkoppler gestellt, was deren Kosten erheblich erhöht.
- Wenn man die Verwendung von externen Medienkonvertern (MC) vermeiden will, ist ein Neudesign der Fast Ethernet-Schnittstellen erforderlich. Wenn man externe Medienkonverter (MC) einsetzt, stehen die ursprünglich verfügbaren 100Base-T-Ports nur noch in eingeschränkter Anzahl zur Verfügung.
- Mit dem gegenwärtigen Stand der Technik können keine vermaschten POF-Netzstrukturen für Heimnetze aufgebaut werden. Es sind nur Punkt-zu-Punkt-Strukturen möglich.
- Bei allen beschriebenen bekannten Lösungen ist die Sendeleistung der optischen Sender durch die zulässigen Werte für die Augensicherheit beschränkt.

Die Aufgabe der vorliegenden Erfindung besteht daher darin, ein Residential Gateway und ein optisches Heimnetz bereitzustellen, das die folgenden Nachteile des Standes der Technik überwindet:
- Es sollen Bitraten größer 100 Mbit/s über optische Übertragungsmedien übertragen werden können, die bisher nicht möglich sind.
- Die Anforderungen an 1:2-Richtkoppler für den Simplexbetrieb sollen erheblich reduziert werden. Die beim Stand der Technik erforderliche hohe Übersprechdämpfung, die die Realisierung der Richtkoppler verteuert, soll reduziert werden bzw. wegfallen.
- Die bisher beim Stand der Technik verfügbaren Ethernetports sollen dem Nutzer weiterhin uneingeschränkt zur Verfügung stehen und sollen nicht für die Anbindung von optischen Übertragungsmedien blockiert werden.
- Mit der Erfindung sollen vermaschte Netzstrukturen ermöglicht und die Anzahl der erforderlichen Medienkonverter (MC, optische Transceiver) reduziert werden bzw. entfallen. Die Möglichkeit der Realisierung von vermaschten Netzstrukturen mit der POF erschließt neue Anwendungsszenarien in Heimnetzen.
- Durch den gewählten Aufbau der Vermaschung und der physikalischen Integration von mehreren Kopplern in einen DM soll erreicht werden, dass ein optischer Sender mit einer Sendeleistung eingesetzt werden kann, der die eigentlichen Anforderungen an die Augensicherheit nicht einhält.

Diese Aufgabe wird durch den Gegenstand der unabhängigen Ansprüche 1 und 4 gelöst. Vorteilhafte Ausführungsformen sind in den abhängigen Ansprüchen beschrieben.

Erfindungsgemäß wird ein Residential Gateway (RG) bereitgestellt mit den Merkmalen des Anspruchs 1. Damit ist es ohne großen Aufwand möglich, mit ergänzten, bestehenden Hardwarekomponenten ein optisches Heimnetz zu schaffen. Denn bei bestehenden Residential Gateways (RG) müssen nur wenige Bauelemente ergänzt werden. Dadurch entfallen die bisher notwendigen Medienkonverter, es werden hohe Datenübertragungsraten größer als Fast-Ethernet-Standard (100 Mbit/s) ermöglicht, und es werden vermaschte Netzstrukturen möglich.

Der optische Anschluss ist als optischer Transceiver nach einer Heimnetzspezifikation wie G.hn gemäß Empfehlung ITU-T G.9960 oder HomeplugAV (HPAV) ausgebildet. Diese Spezifikationen sind für eine Vielzahl von Übertragungsverfahren geeignet und ermöglichen dadurch den Einsatz einer großen Anzahl von verschiedenen Geräten, die bisher mit unterschiedlichen Geräten und Schnittstellen an ein Residential Gateway (RG) angebunden werden mussten.

Erfindungsgemäß weist der optische Anschluss ein Digital Frontend (DFE), ein mit dem Digital Frontend (DFE) verbundenes Analog Frontend (AFE) und mindestens ein mit dem Analog Frontend (AFE) verbundenes Optical Interface (OIF) auf, wobei das mindestens eine Optical Interface (OIF) parallel einen optischen Sender und einen optischen Empfänger umfasst. Mit dieser Struktur kann ein optisches Übertragungsmedium auf einfache Weise angebunden werden. Optischer Sender kann beispielsweise eine Leuchtdiode (LED) sein, als optischer Empfänger kann eine Photodiode dienen.

Mit weiterem Vorteil weist das Residential Gateway (RG) mindestens zwei Optical Interfaces (OIF) auf, die jeweils geeignet sind, optische Signale auch unterschiedlicher Wellenlängen zu verarbeiten. Damit kann ein optischer Anschluss über mehrere optische Übertragungskanäle, beispielsweise mehrere POFs im Simplex-Betrieb, verfügen.

Bevorzugt ist der optische Anschluss als Domainmaster (DM) oder alternativ als Knoten (Node) ausgebildet. Der Domainmaster (DM) ist üblicherweise der erste Anschlusspunkt in einer Netzwerkdomäne.

Weiterhin ist jedes mindestens eine Optical Interface (OIF) entweder für optischen Duplex-Betrieb ausgelegt, wobei jeder optische Sender und jeder optische Empfänger jeweils mit einem optischen Übertragungskanal verbunden sind, oder für optischen Simplex-Betrieb ausgelegt, wobei ein Richtkoppler zwischen optischem Sender und Empfänger und dem optischen Übertragungsmedium angeordnet ist. Je nach Anforderung an das Netzwerk kann eine Duplex- oder eine Simplex-Übertragung sinnvoller sein. Der Duplex-Betrieb bietet eine größere Störunempfindlichkeit, eine besseres QoS sowie höhere Bitraten zwischen Domainmaster und Knoten. Der Simplex-Betrieb bietet den Vorteil, dass auf einen optischen Übertragungskanal verzichtet und damit Material eingespart und die Installation vereinfacht werden kann. Die erforderlichen Richtkoppler sind einfach aufgebaut, unempfindlich und günstig.

Weiterhin erfindungsgemäß ist ein Heimnetzanschluss zur Anbindung an ein optisches Heimnetzwerk über ein optisches Übertragungsmedium, wobei der Heimnetzanschluss ein Digital Frontend (DFE), ein mit dem Digital Frontend (DFE) verbundenes Analog Frontend (AFE) und mindestens ein mit dem Analog Frontend (AFE) verbundenes Optical Interface (OIF) aufweist, wobei das mindestens eine Optical Interface (OIF) parallel einen optischen Sender und einen optischen Empfänger umfasst.

Dabei ist der Heimnetzanschluss als optischer Transceiver nach einer leitungsgebundenen Heimnetzspezifikation für elektrische Übertragungsmedien wie G.hn gemäß Empfehlung ITU-T G.9960 oder HomeplugAV (HPAV) und als Knoten (Node) ausgebildet.

Darüber hinaus ist jedes mindestens eine Optical Interface (OIF) entweder für optischen Duplex-Betrieb ausgelegt, wobei jeder optische Sender und jeder optische Empfänger jeweils mit einem optischen Übertragungskanal verbunden sind, oder für optischen Simplex-Betrieb ausgelegt, wobei ein Richtkoppler zwischen optischem Sender und Empfänger und dem optischen Übertragungsmedium angeordnet ist.

Die oben genannten Vorteile für das Residential Gateway (RG) gelten auch für den Heimnetzanschluss.

Mit dem erfindungsgemäßen Residential Gateway (RG) und mindestens einem erfindungsgemäßen Heimnetzanschluss, die über ein optisches Übertragungsmedium verbunden sind, lässt sich auf einfache Weise ein optisches Heimnetzwerk erstellen.

Bevorzugt sind die Optical Interfaces (OIF) eines optischen Anschlusses des Residential Gateway (RG) und des Heimnetzanschlusses über zwei optische Übertragungskanäle für den Duplex-Betrieb verbunden. Alternativ sind die Optical Interfaces (OIF) eines optischen Anschlusses des Residential Gateway (RG) und des Heimnetzanschlusses über einen optischen Übertragungskanal für den Simplex-Betrieb verbunden. Die Vorteile von Duplex- und Simplex-Betrieb sind oben bereits beschrieben.

Mit weiterem Vorteil ist die Verbindung zwischen Residential Gateway (RG) und dem mindestens ein Heimnetzanschluss als Punkt-zu-Punkt (P-t-P) Verbindung oder als Punkt-zu-Multipunkt (P-t-MP) Verbindung ausgebildet.

Weiterhin bevorzugt ist, dass das optische Übertragungsmedium mindestens einen Richtkoppler und/oder mindestens einen Reflexionskoppler aufweist.

Bei einem Simplex-Betrieb ist eine P-t-MP-Verbindung möglich. Darüber hinaus müssen die Richtkoppler bzw. Reflexionskoppler keine hohe Übersprechdämpfung haben. Die direkte Kommunikation zwischen den Knoten (Nodes) wird durch die Richtkoppler unterbunden. Außerdem sind höhere Bitraten im Vergleich zum Stand der Technik möglich. Die Verwendung von Richtkopplern empfiehlt sich deshalb beispielsweise in Mehrfamilienhäusern, wo eine Kommunikation der Knoten untereinander nicht gewünscht ist. In Wohnungen oder Einfamilienhäusern werden bevorzugt Reflexionskoppler eingesetzt, da dort die direkte Kommunikation zwischen den Knoten bzw. Nodes möglich und erwünscht ist.

Mit besonderem Vorteil ist der mindestens eine Richtkoppler oder der mindestens eine Reflexionskoppler in das Residential Gateway (RG) integriert.

Mit der Erfindung wird es durch die Kombination von modernen Heimnetzverfahren (wie z.B. G.hn nach ITU-T G.9960 oder HomeplugAV; HPAV) und der POF oder einem anderen optischen Übertragungsmedium möglich, vermaschte optische Heimnetzwerke für den Simplexbetrieb aufzubauen, wobei die übertragbaren Bitraten über denen von Fast Ethernet liegen und wobei die Anforderungen an die Übersprechdämpfung der erforderlichen 1:2-Richtkoppler (nachfolgend als "einfache" Richtkoppler bezeichnet) minimal sind.

Neben den "einfachen" 1:2-Richtkopplern, die für die Realisierung des Simplexbetriebes erforderlich sind, ist es für den Aufbau der vermaschten Netzstruktur unabdinglich, weitere Koppler als Koppelelemente zwischen den POFs einzusetzen. Die Auswahl dieses Kopplertyps zwischen den POFs entscheidet über die Zugangsmöglichkeiten bzw. Kommunikationsmöglichkeiten der einzelnen Nodes untereinander. Es wird dabei zwischen zwei Anwendungsszenarien unterschieden. In einem ersten Anwendungsfall, z. B. in einem Mehrfamilienhaus, wo für die Vertikalverteilung (vom Keller in die einzelnen Wohnungen) POF verlegt ist, ist die direkte Kommunikation zwischen Nodes (d.h. den einzelnen Wohnungen) nicht zulässig und in diesem Fall wird als Kopplertyp ein weiterer Richtkoppler (ein 1:n-Richtkoppler, n ist die Anzahl der Nodes/Wohnungen) eingesetzt. In einem zweiten Anwendungsfall, wenn die POF in einer Wohnung die einzelnen Nodes in den Räumen miteinander verbindet, ist die Kommunikation zwischen Nodes erwünscht. Z.B. ist ein Node ein Network Attached Storage (NAS) und ein zweiter Node ist ein Smart TV, oder aber ein Node ist eine Set-Top-Box (STB) und ein zweiter Node ist ein TV. In diesem Fall wird als Kopplertyp ein 1:m-Reflexionskoppler (m ist die Anzahl der Nodes/Räume) eingesetzt.

Die erzielbaren Bitraten zwischen dem Domainmaster DM und den einzelnen Nodes bzw. den Nodes untereinander werden durch die Media Access Control (MAC) der jeweiligen Heimnetztechnologie definiert. Siehe dazu z.B. [Rahman, M.M., et al: Medium Access Control for Power Line Communications: An Overview of the IEEE 1901 and ITU-T G.hn Standards. IEEE Communications Magazine, June 2011, pp. 183-191]. Diese Mechanismen werden auch für die optischen Überragungsmedien übernommen.

Die Erfindung ermöglicht den Aufbau einer neuartigen, vermaschten optischen Heimnetzstruktur unter der Verwendung von optischen Übertragungsmedien. Im Vergleich zu den elektrischen Übertragungsmedien kann so eine höhere QoS gewährleistet werden und höhere Bitraten zwischen dem DM und den Nodes bzw. den Nodes untereinander (u.a. bedingt durch die größere Störunempfindlichkeit der Optik) erzielt werden.

Im Vergleich zur Ethernet-Technik, die für die POF nur eine auf Punkt-zu-Punkt Verbindungen basierende Netzstruktur ermöglicht, ist die Anzahl der erforderlichen Transceiver geringer und man kann einfachere Koppler verwenden.

Durch den Einsatz verschiedener Kopplertypen ist eine "Abschottung" möglich bzw. verhinderbar, wenn es für die Anwendung erforderlich ist.

Im Folgenden soll die Erfindung anhand von schematischen Darstellungen einiger Ausführungsbeispiele ausführlich erläutert werden. Es zeigen:
- Fig. 1: eine schematische Darstellung eines bekannten Residential Gateways in einem Heimnetzwerk;
- Fig. 2: eine schematische Darstellung der Anbindung von Knotenelementen an unterschiedliche elektrische Leitungen;
- Fig. 3: eine schematische Darstellung einer ersten bekannten Anbindung eines Residential Gateways an optische Übertragungsmedien;
- Fig. 4: eine schematische Darstellung einer zweiten bekannten Anbindung eines Residential Gateways an optische Übertragungsmedien;
- Fig. 5: eine schematische Darstellung einer dritten bekannten Anbindung eines Residential Gateways an optische Übertragungsmedien;
- Fig. 6: eine schematische Darstellung einer Datenübertragung über einen optischen Übertragungskanal im Simplex-Betrieb;
- Fig. 7: eine schematische Darstellung einer Anbindung eines Knotens an ein Residential Gateway im Punkt-zu-Punkt Duplex-Betrieb gemäß einer Ausführungsform der Erfindung;
- Fig. 8: eine schematische Darstellung einer Anbindung eines Knotens an ein Residential Gateway im Punkt-zu-Punkt Simplex-Betrieb gemäß einer weiteren Ausführungsform der Erfindung;
- Fig. 9: eine schematische Darstellung einer Anbindung von drei Knoten an ein Residential Gateway im Punkt-zu-Multipunkt Simplex-Betrieb gemäß einer weiteren Ausführungsform der Erfindung;
- Fig. 10: eine schematische Darstellung einer Anbindung von drei Knoten an ein Residential Gateway im Punkt-zu-Multipunkt Simplex-Betrieb gemäß einer weiteren Ausführungsform der Erfindung;
- Fig. 11: eine schematische Darstellung einer Anbindung von drei Knoten an ein Residential Gateway im Punkt-zu-Multipunkt Betrieb gemäß einer weiteren Ausführungsform der Erfindung;
- Fig. 12: eine schematische Darstellung einer Anbindung von drei Knoten an ein Residential Gateway im Repeater Modus gemäß einer weiteren Ausführungsform der Erfindung;
- Fig. 13: eine schematische Darstellung einer Anbindung von drei Knoten mit jeweils zwei Ports an ein Residential Gateway im Punkt-zu-Multipunkt Simplex-Betrieb gemäß einer weiteren Ausführungsform der Erfindung;
- Fig. 14: eine schematische Darstellung einer Anbindung von sechs Knoten an ein Residential Gateway mit zwei Optical Interfaces im Punkt-zu-Multipunkt SimplexBetrieb gemäß einer weiteren Ausführungsform der Erfindung;
- Fig. 15: eine schematische Darstellung der Hardwarekomponenten eines optischen Anschlusses bzw. Heimnetzanschlusses gemäß einer bevorzugten Ausführungsform der vorliegenden Erfindung;
- Fig. 16: eine schematische Darstellung eines Optical Interfaces für Simplex-Betrieb gemäß einer bevorzugten Ausführungsform der vorliegenden Erfindung;
- Fig. 17: eine schematische Darstellung eines Optical Interfaces für Simplex-Betrieb gemäß einer weiteren Ausführungsform der vorliegenden Erfindung; und
- Fig. 18: eine schematische Darstellung eines Optical Interfaces für Simplex-Betrieb mit zwei Wellenlängen gemäß einer weiteren Ausführungsform der vorliegenden Erfindung.

Im Unterschied zum Stand der Technik werden bei der vorliegenden Erfindung nicht die Ethernet-Ports des RG für die optische Übertragung verwendet, sondern die optischen Anschlüsse, die in den Figuren als G.hn-Ports ausgebildet sind und die im konkreten Fall den DM darstellen. Ein G.hn-Port für Koaxialleitungen im RG wird durch einen G.hn-Port für POF ersetzt, wobei verschiedene Anschaltungsmöglichkeiten der Nodes möglich sind. An dieser Stelle ist anzumerken, dass die optischen Anschlüsse bzw. optischen Heimnetzanschlüsse anstelle der G.hn-Empfehlung beispielsweise nach der HomeplugAV (HPAV) Spezifikation ausgebildet sein können oder auch nach einer technologisch ähnlichen Heimnetzwerkspezifikation.

Die Fig. 7 zeigt eine Duplex-P-t-P-Anschaltung zwischen einem DM in einem Residential Gateway (RG) und einem Node bzw. zwischen einem und einem zweiten Node. Es kommen zwei POFs als optisches Übertragungsmedium zur Anwendung, d.h. für jede Übertragungsrichtung eine POF. Die optischen Anschlüsse bzw. Transceiver sind symbolisch als OIF (Optical Interface) dargestellt.

In der Fig. 8 ist eine Simplex-P-t-P-Anschaltung zwischen einem DM und einem Node bzw. zwischen einem und einem zweiten Node dargestellt. Es kommen nur eine POF und an beiden Enden dieser POF jeweils zwei einfache 1:2-Richtkoppler zur Anwendung. Die 1:2-Richtkoppler sind gewöhnliche (Standard-) Koppler, d.h. an sie werden keine hohen Anforderungen an die Übersprechdämpfung gestellt. Ein Beispiel für 1:2-Richtkoppler findet man in [1mm POF-Splitter/ Koppler. http://forschung.harzoptics.de/files/POFCoupler_de.pdf].

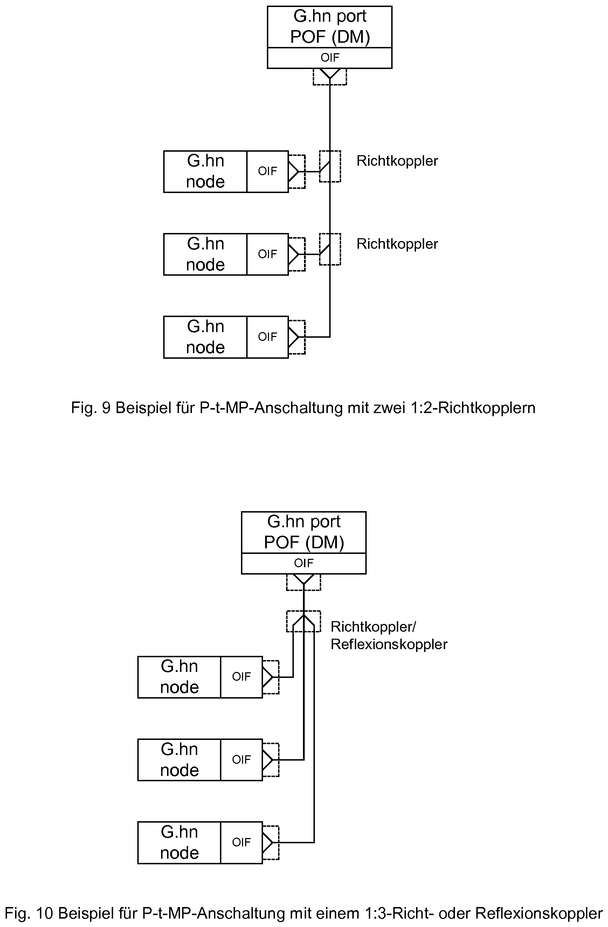

Die nachfolgenden Ausführungsbeispiele (Fig. 9 bis Fig. 14) unterscheiden sich von den bisher beschriebenen dadurch, dass nun mehrere Knoten bzw. Nodes Berücksichtigung finden. Es wird jeweils auf die getrennte Darstellung der Duplex- und Simplex-Anschaltung verzichtet, wobei diese explizit weiterhin möglich ist. Die gewählte Anzahl an Nodes von drei stellt ebenfalls ein Beispiel dar und kann beliebig erweitert werden.

In Fig. 9 ist eine P-t-MP-Anschaltung (Punkt-zu-Multipunkt) eines Domainmasters (DM) in einem Residential Gateway (RG) und drei Nodes dargestellt. Es kommen hierbei an jedem Abzweig einfache 1:2-Richtkoppler (d.h. ohne hohe Ansprüche an die Übersprechdämpfung) zur Verwendung, welche Anteile des optischen Signal vom Gesamtsignal abspalten und den einzelnen Nodes zuführen. Für die 1:2-Richtkoppler können unterschiedliche Splittingfaktoren verwendet werden, um die Anteile der jeweils den einzelnen Nodes zugeführten optischen Signalleistung, etwa in Abhängigkeit von der Reichweite (Netztopologie), zu optimieren. Das in Fig. 9 gezeigte Ausführungsbeispiel ist sehr gut für Anwendungen in Mehrfamilienhäusern geeignet: In diesem Fall kann der DM im Keller untergebracht werden, die einzelnen Nodes stellen den Netzabschluss in den Wohnungen dar. Durch die Verwendung von Richtkopplern ist gewährleistet, dass die einzelnen Nodes nicht direkt miteinander kommunizieren können. Soll die dargestellte Simplex-Struktur in eine Duplex-Struktur überführt werden, sind pro Abzweig die doppelte Anzahl an 1:2-Richtkopplern und die doppelte Anzahl an POF notwendig, wobei die 1:2-Richtkoppler an den OIF entfallen können. Im Vergleich zum Stand der Technik in den Fig. 3 bis Fig. 5 sind Bitraten größer als 100 Mbit/s, d.h. Fast Ethernet möglich (G.hn ermöglicht sogar PHY-Bitraten von bis zu 1 Gbit/s).

Das Ausführungsbeispiel nach Fig. 10 stellt wiederum eine P-t-MP-Anschaltung dar, wobei das Ziel verfolgt wird, die Richtkoppler in DM-Nähe unterzubringen. Für die Anschaltung von drei Nodes an einen DM werden im Unterschied zu Fig. 9 1:n-Richtkoppler verwendet (n richtet sich nach der Anzahl der Nodes, im konkreten Beispiel n = 3). In der Richtung vom DM zu den Nodes teilt der 1:n-Richtkoppler die Lichtleistung entsprechend den Splittingfaktoren auf und leitet die Lichtleistung an die einzelnen Nodes weiter. Durch die Verwendung eines Richtkopplers wird gewährleistet, dass die Nodes nicht miteinander kommunizieren können. Dies ist für die Anwendung in Mehrfamilienhäusern Bedingung.

Um alternativ auch eine Kommunikation der einzelnen Nodes untereinander zu ermöglichen, können anstelle von Richt- auch Reflexions-Koppler verwendet werden. Diese Struktur kommt beispielsweise dort zur Anwendung, wo der DM in der Wohnung oder in einem Einfamilienhaus untergebracht ist und sich die Nodes in unterschiedlichen anderen Räumen befinden. Somit kann beispielsweise die Set-Top-Box (STB) direkt mit dem PC Daten austauschen.

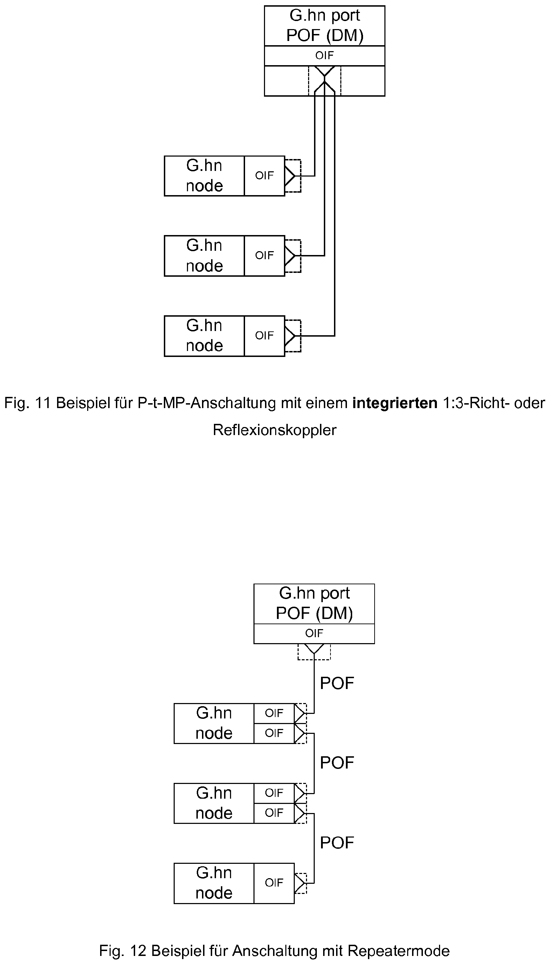

Für das Beispiel nach Fig. 10 (Simplex- oder Duplex-Anschaltung; jeweils mit Richt- oder Reflexionskopplern) sind die Richt- oder Reflexionskoppler jeweils nicht Bestandteil des DM, d.h. sie sind extern angeordnet. Dies hat zur Folge, dass gesetzliche Regularien zur Augensicherheit die maximale optische Sendeleistung des DM begrenzen. Zur Überwindung der zusätzlichen Dämpfung der im System vorhandenen Koppler ist jedoch eine Maximierung der optischen Sendeleistung (zur Erhöhung der Reichweite etc.) anzustreben. In Fig. 11 wird daher nun der 1:n-Richt- oder -Reflexionskoppler zur Anbindung der einzelnen Nodes direkt in den DM integriert. Dies hat den Vorteil, dass dort ein optisches Sendeelement mit einer weitaus höheren Sendeleistung verwendet werden kann, wobei die optische Ausgangsleistung den Augensicherheitsbestimmungen nur an den Ausgängen der Splitter und somit an den Anschlüssen des DM erfüllen muss.

Das Ausführungsbeispiel aus Fig. 11 ist als Simplex-System mit 1:n-Richtkoppler sehr gut für den Einsatz in mit POF verkabelten Mehrfamilienhäusern geeignet und erlaubt einerseits hohe Bitraten und andererseits die Verwendung von nur jeweils einer POF zwischen DM und den Nodes. Ein zusätzlicher Vorteil erwächst dadurch, dass nun zwischen dem DM und jedem Node eine dedizierte POF verlegt wird, d.h. man hat eine Netzstruktur geschaffen, die später für P-t-P-Anschaltungen als Basis dienen kann.

Für den Fall, dass die Entfernung zwischen dem DM und einzelnen Nodes zu groß ist, als dass sie direkt vom DM aus überbrückt werden kann, ist ein Betrieb der Nodes als Repeater möglich. Dabei verfügt jeder Node über zwei unabhängige optische (Duplex- oder Simplex-) Schnittstellen, wobei sich wie in Fig. 12 dargestellt eine sogenannte Daisy-Chain-Topologie ergeben kann. Ein am Beginn der Kette positionierter Node ist somit in der Lage, für einen weiter hinten in der Kette positionierten Node bestimmte Daten vom DM zu regenerieren. Zusätzliche Übertragungskanäle sind damit nicht mehr erforderlich.

Alle bisher beschriebenen Ausführungsbeispiele (Fig. 7 bis Fig. 12) sind davon ausgegangen, dass die DM und Nodes keine Multiport-Devices (siehe Fig. 2) sind. Die nun folgenden Ausführungsbeispiele (Fig. 12 bis Fig. 14) gehen von der Nutzung von Multiport-Devices aus.

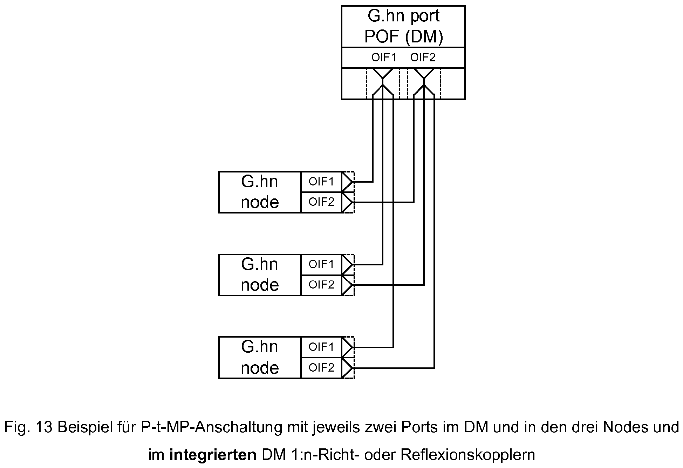

Das Ausführungsbeispiel in Fig. 13 zeigt einen DM und die entsprechenden Nodes, die jeweils über zwei POF-Schnittstellen mit Richt- oder Reflexionskoppler verfügen. Beide POF-Schnittstellen sind identisch realisiert, d.h. unter anderem, dass sie im gleichen Wellenlängenbereich arbeiten. Durch eine Verdopplung der Anzahl der POF-Schnittstellen und der POF zwischen dem DM und den Nodes kann auf diese Art und Weise die Bitrate, die zwischen dem DM und den Nodes übertragen werden kann, verdoppelt werden. Als nachteilig erweist sich hierbei, dass in diesem Beispiel pro Node zwei (für Simplex) bzw. vier (für Duplex) POF benötigt werden. Es ist jedoch auch die Nutzung verschiedener Wellenlängen zur Übertragung der einzelnen Signale möglich, was die Systemkomplexität reduziert.

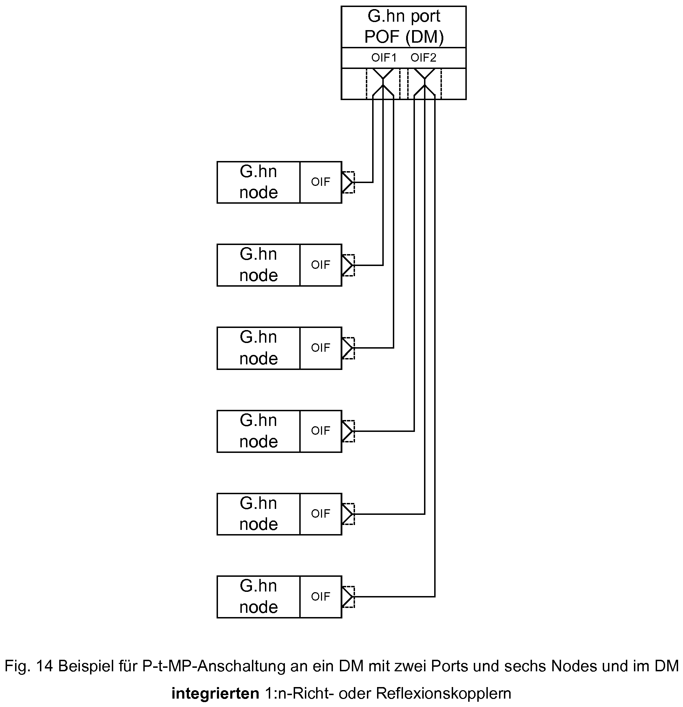

Alternativ zum in Fig. 13 dargestellten Prinzip kann auch die Anzahl der Nodes verdoppelt werden (siehe Fig. 14).

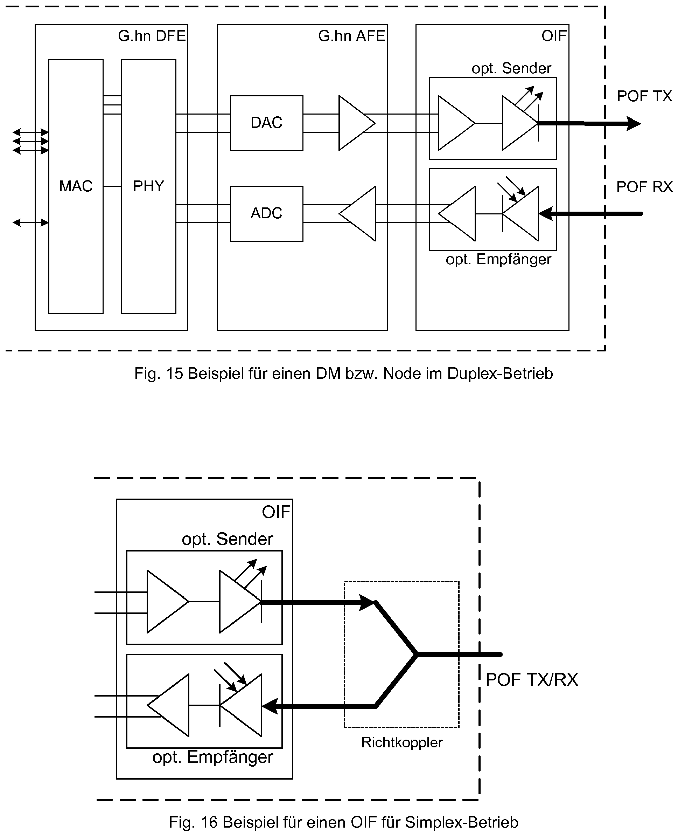

In der Fig. 15 ist ein Ausführungsbeispiel für einen DM bzw. Node bei einer Duplex-Anschaltung dargestellt (passend zu Fig. 7). Dieser besteht in diesem Beispiel aus einem G.hn DFE (Digital Front End), welches u.a. zur Übertragung bestimmte Daten vom System, in welchem dieses integriert ist, entgegen nimmt, aufbereitet und entsprechend dem Übertragungsstandard und Medienzugriffsverfahren aufbereitet und moduliert. Dazu werden die Blöcke MAC (Media Access Control) und PHY (PHYsical Layer) genutzt, welchen meist ein hier nicht dargestellter Netzwerkprozessor mit volatilen und non-volatilen Speichern sowie Stromversorgungsschaltungen zur Seite stehen. Die modulierten Daten werden nun dem G.hn AFE (Analog Front End) über ein Interface zugeführt. Dieses AFE ist dafür zuständig, die Daten von der digitalen in die analoge Domäne zu wandeln und zurück (DAC, Digital-to-Analog-Converter und ADC, Analog-to-Digital-Converter). Danach wird nun, anstelle der sonst bei G.hn üblicheren Schnittstellen für Kupferkabel-Medien ein optisches Interface (OIF) angebunden. Dieses optische Interface besteht aus einem optischen Sender und einem optischen Empfänger. Die Senderschaltung besteht dabei aus einem Vorverstärker und einem optischen Sendeelement (z.B. LED oder Laser). Die Empfängerschaltung aus einem optischen Empfangselement (z.B. Pin-Photodiode) und einer oder mehreren Verstärkerstufen. Aus diesem OIF führen nun Lichtleiter (z.B. POF), welche die Realisierung der in den vorherigen Abschnitten dargestellten Ausführungsbeispiele erlauben. In Fig. 15 ist der Duplex-Betrieb dargestellt.

Die Realisierung des Simplex-Betriebs zeigt Fig. 16. Dabei wird neben dem schon in Fig. 15 erläuterten OIF ein 1:2-Richtkoppler zur "Mischung" der Richtungen verwendet. In der konkreten Realisierung kann dies beispielweise ein POF-Schmelzkoppler oder ein Spritzgussteil sein.

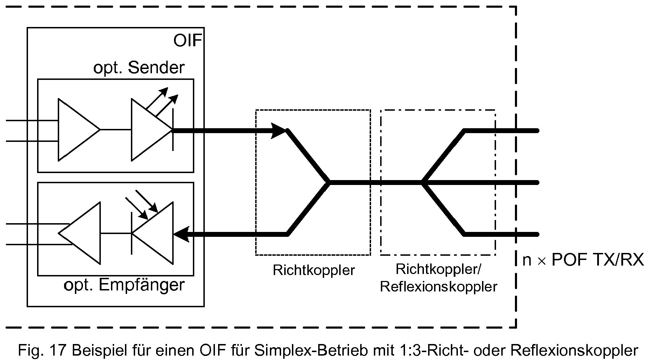

Zur Anbindung mehrerer Nodes an den dargestellten DM ist die Funktionsweise eines 1:3-Reflexionskopplers in einem Simplex-System in Fig. 17 dargestellt. Dabei ist beispielhaft neben dem bereits in Fig. 16 gezeigten 1:2-Richtkoppler ein 1:3-Richt- oder 1:3-Reflexionskoppler dargestellt. Dieser kann ebenfalls als POF-Schmelzkoppler oder als Spritzgussteil realisiert sein. Eine Besonderheit an dieser Stelle ist, dass ein 1:2- und ein 1:3-Richtkoppler direkt in einem Bauelement realisiert werden können. Nach diesem Prinzip kann sowohl das in Fig. 10 dargestellte P-t-MP mit externem oder das in Fig. 11 dargestellte P-t-MP mit integrierten Kopplern realisiert werden.

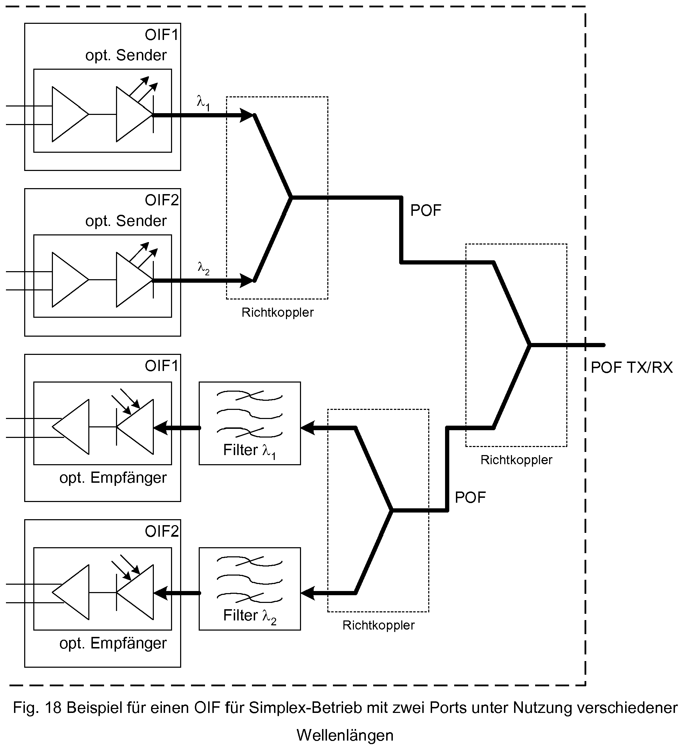

Ein weiterer Realisierungsansatz ist in Fig. 18 dargestellt. Dabei wird das oben beschriebene Verfahren der Nutzung von Multiport-Devices genutzt, um ein sogenanntes Wavelength Division Multiplexing- (WDM-) System (hier mit zwei Wellenlängen) zu realisieren. Die Sender und Empfänger von OIF1 und OIF2 sind dabei gruppiert dargestellt. Während die Sender parallel ohne Anpassungen mit verschiedenen Wellenlängen senden können, bedarf es bei den Empfängern eines weiteren Bauelements zur Herausfilterung der jeweiligen genutzten Signalanteile. Dazu können u.a. Prismen oder Folienfilter verwendet werden, wobei u.U. auch der Richtkoppler vor den Filtern entfallen kann. Dieses Gesamtkonstrukt des WDM-Transceivers (auch für mehr Wellenlängen) kann wiederum diskret, zu Teilen diskret oder zu einem Bauelement kombiniert realisiert werden.

Auch wenn Ausführungsbeispiele sich auf G.hn beziehen, soll darauf hingewiesen werden, dass die erfindungsgemäßen Lösungen auch für andere Heimnetztechnologien entsprechend angewendet werden können, beispielsweise auf IEEE 1901 oder HPAV.

Auch ist die Einschränkung auf ein Heimnetz nicht wörtlich zu betrachten. Selbstverständlich können die erfindungsgemäßen Gegenstände und Lösungen auch in anderen Anwendungsfällen, wo die Heimnetztechnologien verwendet werden, genutzt werden, beispielsweise in Office-Netzwerken und Backbones, der Automatisierungstechnik, in Fahrzeugen oder auch in Flugzeugen.

**Abkürzungsverzeichn is:**

| | |
|---|---|
| ADC | Analog-to-Digital-Converter |
| AFE | Analog Front End |
| CPE | Customer Premises Equipment |
| DAC | Digital-to-Analog-Converter |
| DFE | Digital Front End |
| DM | Domainmaster |
| DSL | Digital Subscriber Line |
| G.hn | G.home networking |
| HD-PLC | High Density-Powerline Communication |
| HDTV | High Definition-TV |
| HomePNA | (Home) Phoneline Networking Alliance |
| HP | HomePlug |
| HPAV | HomePlug Audio/Video |
| IAD | Integrated Access Device |
| IDB | Inter-domain Bridge |
| IEEE | Institute of Electrical and Electronics Engineers |
| LAN | Local Area Network |
| MAC | Media Access Control |
| MC | Medienconverter |
| MoCA | Multimedia over Coax Alliance |
| MP | Multipunkt |
| NAS | Network Attached Server |
| OIF | Optical Interface |
| PC | Personal Computer |
| PHY | PHYsical Layer |
| PLC | Powerline Communication |
| POF | Polymer-optical Fiber |
| PON | Passive Optical Network |
| QoS | Quality-of-Service |
| RG | Residential Gateway |
| RX | Empfangsrichtung |
| STB | Set-Top-Box |
| TX | Senderichtung |
| UPA | Universal Powerline Association |
| WAN | Wide Area Network |
| WDM | Wavelength Division Multiplexing |
| WLAN | Wireless Local Area Network |

## Patentansprüche

1. Residential Gateway (RG) mit
einem Breitbandanschluss (WAN-Port) zur Anbindung an einen Internet Service Provider (ISP) auf einer Eingangsseite,
einer Verbindungs- und Verarbeitungseinheit (Interconnecting & Processing Unit; IPU), und
einer Mehrzahl von Schnittstellen zum Anschluss von mit einer Internetdatenverbindung ausgestatteten Geräten auf einer Ausgangsseite nach den G.hn oder HPAV Spezifikationen,
**dadurch gekennzeichnet, dass**
mindestens eine der Mehrzahl von Schnittstellen als optischer Anschluss ausgebildet und mit einem optischen Übertragungsmedium verbindbar ist,
der optische Anschluss als optischer Transceiver nach einer leitungsgebundenen Heimnetzspezifikation für elektrische Übertragungsmedien, nämlich G.hn gemäß Empfehlung ITU-T G.9960 oder HomeplugAV (HPAV), ausgebildet ist, und
der optische Anschluss ein Digital Frontend (DFE), ein mit dem Digital Frontend (DFE) verbundenes Analog Frontend (AFE) und mindestens ein mit dem Analog Frontend (AFE) verbundenes Optical Interface (OIF) aufweist, wobei das mindestens eine Optical Interface (OIF) parallel einen optischen Sender und einen optischen Empfänger umfasst,
wobei jedes mindestens eine Optical Interface (OIF)
entweder für optischen Duplex-Betrieb eingerichtet ist, wobei jeder optische Sender und jeder optische Empfänger jeweils mit einem optischen Übertragungskanal verbunden sind,
oder für optischen Simplex-Betrieb eingerichtet ist, wobei ein Richtkoppler zwischen optischem Sender und Empfänger und dem optischen Übertragungsmedium anordenbar ist.

2. Residential Gateway (RG) nach Anspruch 1, **dadurch gekennzeichnet, dass** es mindestens zwei Optical Interfaces (OIF) aufweist, die jeweils geeignet sind, optische Signale auch unterschiedlicher Wellenlängen zu verarbeiten.

3. Residential Gateway (RG) nach einem der vorhergehenden Ansprüche, **dadurch gekennzeichnet, dass** der optische Anschluss als Domainmaster (DM) oder alternativ als Knoten (Node) ausgebildet ist.

4. Heimnetzanschluss zur Anbindung an ein optisches Heimnetzwerk über ein optisches Übertragungsmedium, wobei der Heimnetzanschluss ein Digital Frontend (DFE), ein mit dem Digital Frontend (DFE) verbundenes Analog Frontend (AFE) und mindestens ein mit dem Analog Frontend (AFE) verbundenes Optical Interface (OIF) aufweist, wobei das mindestens eine Optical Interface (OIF) parallel einen optischen Sender und einen optischen Empfänger umfasst,
**dadurch gekennzeichnet, dass**
der Heimnetzanschluss als optischer Transceiver nach einer leitungsgebundenen Heimnetzspezifikation für elektrische Übertragungsmedien, nämlich G.hn gemäß Empfehlung ITU-T G.9960 oder HomeplugAV (HPAV) und als Knoten (Node), ausgebildet ist,
wobei jedes mindestens eine Optical Interface (OIF)
entweder für optischen Duplex-Betrieb eingerichtet ist, wobei jeder optische Sender und jeder optische Empfänger jeweils mit einem optischen Übertragungskanal verbunden sind,
oder für optischen Simplex-Betrieb eingerichtet ist, wobei ein Richtkoppler zwischen optischem Sender und Empfänger und dem optischen Übertragungsmedium anordenbar ist.

5. Optisches Heimnetzwerk mit
- einem Residential Gateway (RG) nach einem der Ansprüche 1 bis 3 und
- mindestens einem Heimnetzanschluss nach Anspruch 4,
die über ein optisches Übertragungsmedium verbunden sind.

6. Optisches Heimnetzwerk nach Anspruch 5, **dadurch gekennzeichnet, dass** die Optical Interfaces (OIF) eines optischen Anschlusses des Residential Gateway (RG) und des Heimnetzanschlusses über zwei optische Übertragungskanäle für den Duplex-Betrieb verbunden sind.

7. Optisches Heimnetzwerk nach Anspruch 5, **dadurch gekennzeichnet, dass** die Optical Interfaces (OIF) eines optischen Anschlusses des Residential Gateway (RG) und des Heimnetzanschlusses über einen optischen Übertragungskanal für den Simplex-Betrieb verbunden sind.

8. Optisches Heimnetzwerk nach einem der Ansprüche 5 bis 7, **dadurch gekennzeichnet, dass** Verbindung zwischen Residential Gateway (RG) und dem mindestens eine Heimnetzanschluss als Punkt-zu-Punkt (P-t-P) Verbindung oder als Punkt-zu-Multipunkt (P-t-MP) Verbindung ausgebildet ist.

9. Optisches Heimnetzwerk nach einem der Ansprüche 5 bis 8, **dadurch gekennzeichnet, dass** das optische Übertragungsmedium mindestens einen Richtkoppler und/oder mindestens einen Reflexionskoppler aufweist.

10. Optisches Heimnetzwerk nach Anspruch 9, **dadurch gekennzeichnet, dass** der mindestens eine Richtkoppler oder der mindestens eine Reflexionskoppler in das Residential Gateway (RG) oder in den Heimnetzanschluss integriert ist.

## Claims

1. Residential gateway (RG) with a broadband connection (WAN Port) for connecting to an internet service provider (ISP) on an input side,
an interconnecting and processing unit (IPU) and a plurality of interfaces for connecting appliances fitted with an internet data connection on an output side according to the G.hn or HPAV specifications,
**characterised in that** at least one of the plurality of interfaces is designed as an optical connection and is connectable to an optical transmission medium,
he optical connection is designed as an optical transceiver according to a wired home network specification for electrical transmission media, namely G.hn according to the recommendation ITU- G.9960 or homeplugAV (HPAV), and
the optical connection has a digital frontend (DFE), an analog frontend (AFE) connected to the digital frontend (DFE), and at least one optical interface (OIF) connected to the analog frontend (AFE), wherein the at least one optical interface (OIF) comprises in parallel an optical transmitter and an optical receiver,
wherein each at least one optical interface (OIF) is either set up for optical Duplex operation wherein each optical transmitter and each optical receiver are each connected to an optical transmission channel, or is set up for optical simplex operation, wherein a directional coupler can be arranged between the optical transmitter and receiver and the optical transmission medium.

2. Residential gateway (RG) according to claim 1 **characterised in that** it has at least two optical interfaces (OIF) which are each suitable to process optical signals even of different wavelengths.

3. Residential gateway (RG) according to one of the preceding claims
**characterised in that** the optical connection is configured as a domain master (DM) or alternatively as a node.

4. Home network connection for connecting to an optical home network via an optical transmission medium, wherein the home network connection has a digital frontend (DFE), an analog frontend (AFE) connected to the digital frontend (DFE), and at least one optical interface (OIF) connected to the analog frontend (AFE), wherein the at least one optical interface (OIF) comprises in parallel an optical transmitter and an optical receiver,
**characterised in that** the home network connection is formed as an optical transceiver according to a wired home network specification for electrical transmission media, namely G.hn according to the recommendation ITU-T G.9960 or homeplugAV (HPAV) and as a node, wherein each at least one optical interface (OIF) is either set up for optical duplex operation wherein each optical transmitter and each optical receiver are each connected to an optical transmission channel, or is set up for optical simplex operation wherein a directional coupler can be arranged between the optical transmitter and receiver and the optical transmission medium.

5. Optical home network with
- a residential gateway (RG) according to one of claims 1 to 3 and
- at least one home network connection according to claim 4, which are connected via an optical transmission medium.

6. Optical home network according to claim 5, **characterised in that** the optical interfaces (OIF) of an optical connection of the residential gateway (RG) and the home network connection are connected via two optical transmission channels for the duplex operation.

7. Optical home network according to claim 5 **characterised in that** the optical interfaces (OIF) of an optical connection of the residential gateway (RG) and the home network connection are connected via one optical transmission channel for the simplex operation.

8. Optical home network according to one of claims 5 to 7 **characterised in that** the connection between the residential gateway (RG) and the at least one home network connection is configured as a point-to-point (P-t-P) connection or as a point-to-multipoint (P-t-MP) connection.

9. Optical home network according to one of claims 5 to 8 **characterised in that** the optical transmission medium has at least one directional coupler and/or at least one reflection coupler.

10. Optical home network according to claim 9 **characterised in that** the at least one directional coupler or the at least one reflection coupler is integrated into the residential gateway (RG) or into the home network connection.

## Revendications

1. Passerelle résidentielle (RG) présentant
une connexion à large bande (port WAN) pour une connexion à un fournisseur de service Internet (ISP) sur un côté d'entrée,
une unité de traitement et d'interconnexion (IPU), et
une pluralité d'interfaces pour connecter des appareils équipés d'une liaison de données Internet sur un côté de sortie selon les spécifications G.hn ou HPAV,
**caractérisée en ce que**
au moins une interface de la pluralité d'interfaces est réalisée sous la forme d'une connexion optique et peut être raccordée à un support de transmission optique,
la connexion optique est réalisée sous la forme d'un émetteur-récepteur optique selon une spécification de réseau domestique filaire pour des supports de transmission électriques, à savoir G.hn conformément à la recommandation ITU-T G.9960 ou HomeplugAV (HPAV), et
la connexion optique comporte un frontal numérique (DFE), un frontal analogique (AFE) raccordé au frontal numérique (DFE) et au moins une interface optique (OIF) raccordée au frontal analogique (AFE), l'interface ou les interfaces optiques (OIF) comportant en parallèle un émetteur optique et un récepteur optique,
chaque au moins une interface optique (OIF)
étant conçue soit pour un mode duplex optique, chaque émetteur optique et chaque récepteur optique étant raccordés respectivement à un canal de transmission optique,
soit pour un mode simplex optique, un coupleur directif pouvant être agencé entre l'émetteur optique et le récepteur optique et le support de transmission optique.

2. Passerelle résidentielle (RG) selon la revendication 1, **caractérisée en ce qu'**elle comprend au moins deux interfaces optiques (OIF), qui sont chacune adaptées à traiter des signaux optiques également de différentes longueurs d'onde.

3. Passerelle résidentielle (RG) selon l'une quelconque des revendications précédentes, **caractérisée en ce que** la connexion optique est réalisée sous la forme d'un maître de domaine (DM) ou en variante d'un noeud.

4. Connexion de réseau domestique pour la connexion à un réseau domestique optique par l'intermédiaire d'un support de transmission optique, la connexion de réseau domestique comprenant un frontal numérique (DFE), un frontal analogique (AFE) raccordé au frontal numérique (DFE) et au moins une interface optique (OIF) raccordée au frontal analogique (AFE), l'interface ou les interfaces optiques (OIF) comportant en parallèle un émetteur optique et un récepteur optique,
**caractérisée en ce que**
la connexion de réseau domestique est réalisée sous la forme d'un émetteur-récepteur optique selon une spécification de réseau domestique filaire pour des supports de transmission électriques, à savoir G.hn conformément à la recommandation ITU-T G.9960 ou HomeplugAV (HPAV) et sous la forme de noeuds,
chaque au moins une interface optique (OIF)
étant conçue soit pour un mode duplex optique, chaque émetteur optique et chaque récepteur optique étant raccordés respectivement à un canal de transmission optique,
soit pour un mode simplex optique, un coupleur directif pouvant être agencé entre l'émetteur optique et le récepteur optique et le support de transmission optique.

5. Réseau domestique optique comprenant
- une passerelle résidentielle (RG) selon l'une quelconque des revendications 1 à 3 et
- au moins une connexion de réseau domestique selon la revendication 4,
qui sont raccordées par l'intermédiaire d'un support de transmission optique.

6. Réseau domestique optique selon la revendication 5, **caractérisé en ce que** les interfaces optiques (OIF) d'une connexion optique de la passerelle résidentielle (RG) et de la connexion de réseau domestique sont raccordées par l'intermédiaire de deux canaux de transmission optiques pour le mode duplex.

7. Réseau domestique optique selon la revendication 5, **caractérisé en ce que** les interfaces optiques (OIF) d'une connexion optique de la passerelle résidentielle (RG) et de la connexion de réseau domestique sont raccordées par l'intermédiaire d'un canal de transmission optique pour le mode simplex.

8. Réseau domestique optique selon l'une quelconque des revendications 5 à 7, **caractérisé en ce que** l'interconnexion entre la passerelle résidentielle (RG) et la ou les connexions de réseau domestique est réalisée sous la forme d'une interconnexion point à point (P-t-P) ou sous la forme d'une interconnexion point à multipoint (P-t-MP).

9. Réseau domestique optique selon l'une quelconque des revendications 5 à 8, **caractérisé en ce que** le support de transmission optique comprend au moins un coupleur directif et/ou au moins un coupleur à réflexion.

10. Réseau domestique optique selon la revendication 9, **caractérisé en ce que** le ou les coupleurs directifs ou le ou les coupleurs à réflexion sont intégrés dans la passerelle résidentielle (RG) ou dans la connexion de réseau domestique.
